# EUROPEAN PATENT APPLICATION

(11) **EP 2 631 453 A2**
(43) Date of publication of application: **28.08.2013**
(21) Application number: 13156615.0
(22) Date of filing: 25.02.2013
(51) Int. Cl.: F02C 7/232, F02C 9/40

(54) **Fuel purging system for a turbine assembly**

(30) Priority: 27.02.2012 US 201213405729
(71) Applicant: General Electric Company, Schenectady, New York 12345 (US)
(72) Inventor: Nenmeni, Vijay Anand Raghavendran, Atlanta, GA Georgia 30339-8402 (US); Lawler, John Fitzgerald, Atlanta, GA Georgia 30339-8402 (US); Chriswindarto, Wulang Edwien, Atlanta, GA Georgia 30339-8402 (US); Hadley, Jonathon Michael, Schenectady, NY New York 12345 (US)
(74) Representative: Cleary, Fidelma

(57) **Abstract**

A fuel purging system for a turbine assembly includes a fuel delivery system (14). The fuel delivery system (14) includes a fuel source (38) for providing a fuel to the turbine assembly, a control valve (46) for regulating a fuel flow of the fuel, a flow divider (48) for selectively distributing the fuel to at least one combustor (24), and a combustor valve (50) located upstream of the at least one combustor (24). The fuel purging system also includes a steam source (54) for distributing a steam to the fuel delivery system (14) at a location upstream of the combustor valve (50).

## Description

### BACKGROUND OF THE INVENTION

The subject matter disclosed herein relates to fuel delivery systems of turbine assemblies, and more particularly to purging fuel therein.

Gas turbines used for power generation employ either gas fuel (e.g., natural gas, syngas, etc.) or liquid fuel, such as distillate oil or Naphtha. Some gas turbines run exclusively on gas fuel and some run exclusively on liquid fuel, while others operate with a liquid fuel backup. In this case, the liquid fuel is not used for startups or shutdowns. Yet other turbines, known as dual fuel turbines utilize liquid fuel and gas fuel, with either the liquid fuel or the gas furl serving as a primary fuel.

For gas turbines operating on liquid fuel or as a dual fuel unit, liquid fuel coking and carbon deposition are fundamental issues that impact the reliability and availability of the units. Coke formation is a cause of system failures, as the coke may clog check valves, distributor valves, fuel nozzles, and liquid fuel tubing. Approximate coke formation temperatures for distillate are 250°F in the presence of oxygen and 350°F with no oxygen present. Coking mitigation strategies used today include liquid fuel recirculation, N₂ purge systems, air purge systems, and water cooled check valves. While these methods have certain degrees of effectiveness against coke formation, some are expensive, while others are not entirely reliable in removing coke subsequent to its formation.

### BRIEF DESCRIPTION OF THE INVENTION

According to one aspect of the invention, a fuel purging system for a turbine assembly includes a fuel delivery system. The fuel delivery system includes a fuel source for providing a fuel to the turbine assembly, a control valve for regulating a fuel flow of the fuel, a flow divider for selectively distributing the fuel to at least one combustor, and a combustor valve located upstream of the at least one combustor. The fuel purging system also includes a steam source for distributing a steam to the fuel delivery system at a location upstream of the combustor valve.

According to another aspect of the invention, a method of purging fuel from a turbine assembly includes providing a fuel delivery system having a fuel supply and a combustor valve located upstream of a combustor. Also included is providing a steam source. Further included is operably connecting the steam source to the fuel delivery system. Yet further included is selectively delivering a steam from the steam source to the fuel delivery system at a location upstream of the combustor valve.

According to yet another aspect of the invention, a method of purging liquid fuel from a turbine assembly includes providing a liquid fuel delivery system having a liquid fuel supply, a liquid fuel control valve, and a combustor valve located upstream of a combustor. Also included is providing a steam delivery system having a steam source and a steam control valve. Further included is operably connecting the steam delivery system to the liquid fuel delivery system. Yet further included is selectively delivering a steam from the steam delivery system to the liquid fuel delivery system at a location upstream of the combustor valve.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is a schematic illustration of a turbine system;
FIG. 2 is a schematic illustration of a steam purge system for a turbine assembly of a first embodiment;
FIG. 3 is a schematic illustration of the steam purge system of a second embodiment;
FIG. 4 is a schematic illustration of the steam purge system of a third embodiment;
FIG. 5 is a schematic illustration of the steam purge system of a fourth embodiment;
FIG. 6 is a flow diagram illustrating a method of purging fuel from the turbine assembly;
FIG. 7 is a flow diagram illustrating a method of valve sequencing;
FIG. 8 is a graphical illustration of a valve sequencing method; and
FIG. 9 is a graphical illustration of a valve sequencing method.

The detailed description explains embodiments of the invention, together with advantages and features, by way of example with reference to the drawings.

### DETAILED DESCRIPTION OF THE INVENTION

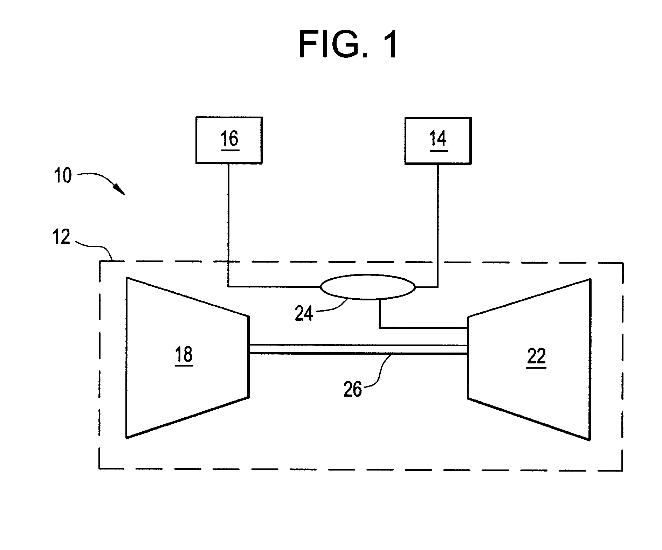

Referring to FIG. 1, a turbine system 10 is schematically illustrated and comprises a turbine compartment 12, a liquid fuel delivery system 14, and a gas delivery system 16. In the exemplary embodiment, the turbine system 10 is a dual fuel combustion turbine engine, however, it is to be appreciated that other types of engines, such as those that bum liquid fuel exclusively may be utilized, and more specifically any turbine assembly 10 that employs liquid fuel in any respect. The turbine compartment 12 includes a compressor 18, a combustor 24 and a turbine 22.

In operation, air flows into the compressor 18 and is compressed into a high pressure gas. The high pressure gas is supplied to the combustor24 and mixed with fuel, for example process gas and/or synthetic gas (syngas). The fuel and compressed air are passed into the combustor 24 and ignited to form a high temperature, high pressure combustion product or air stream that is used to drive the turbine 22. The turbine 22 includes a plurality of rotating assemblies or stages that are operationally connected to the compressor 18 through a compressor/turbine shaft or rotor 25.

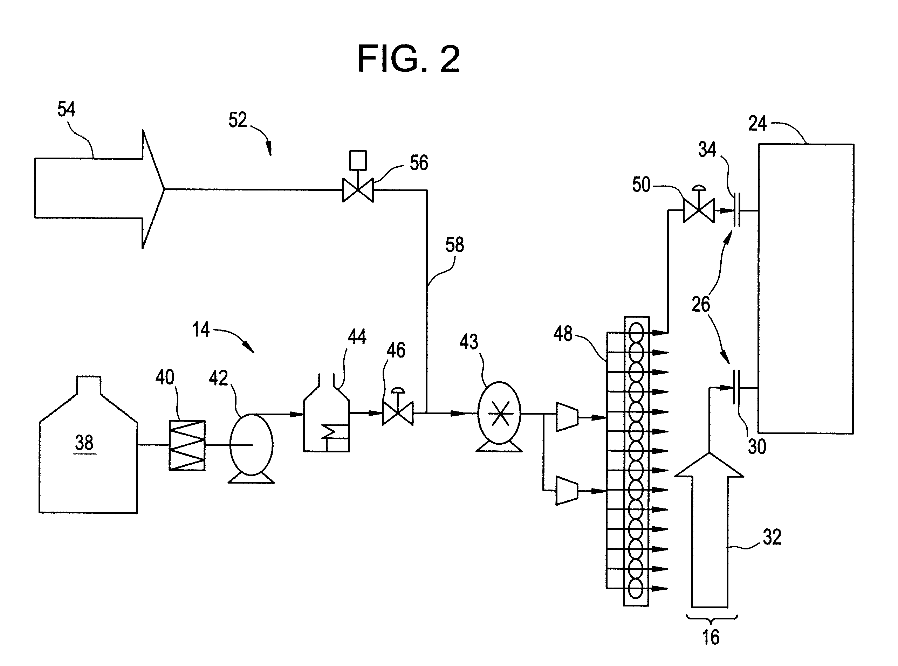

Referring now to FIG. 2, the combustor 24 includes a fuel nozzle assembly 26 that typically includes a plurality of fuel nozzles. More specifically, each fuel nozzle assembly 26 includes a gaseous fuel nozzle 30 coupled in flow communication with a gaseous fuel source 32. Such gaseous fuels enable operation of the turbine assembly 10 as described herein including, but not limited to, clean syngas and natural gas. Also, each fuel nozzle assembly 26 includes a liquid fuel nozzle 34 coupled in flow communication with a liquid fuel source 38. Such liquid fuels are carbonaceous liquid fuels that enable operation of the turbine assembly 10 as described herein including, but not limited to, distillate oil or Naphtha.

The liquid fuel delivery system 14 includes the liquid fuel source 38, such as a tank, that stores liquid fuel for selective delivery to the turbine compartment 12. The liquid fuel goes through one or more stages of cleaning by passing through a filter 40, such as a strainer, for example, and is then pumped to a required pressure through one or more pumps, illustrated as a first liquid fuel pump 42 and a second liquid fuel pump 43. The liquid fuel may be heated in the fuel delivery system 14 by a heat source 44, a variety of which may be used for the heating purpose. A control valve 46 controls the fuel flow based on turbine assembly 10 conditions and requirements. A flow divider 48 meters the liquid fuel to the combustor 24. A combustor valve 50 provides yet another flow control mechanism prior to actual delivery to the combustor 24. The combustor valve 50 may be a 3-way valve that provides the capability to receive the liquid fuel and distribute the liquid fuel to both the liquid fuel nozzle 34 of the combustor 24 and optionally a liquid fuel recirculation system that delivers liquid fuel back to the liquid fuel source 38.

The turbine assembly 10 also includes a steam delivery system 52 that includes a steam source 54. The steam source 54 may comprise a heat recovery steam generator (HRSG), a boiler, or any other suitable structure capable of storing and delivering steam. In the case of a HRSG, the steam may be derived from the low pressure (LP) section, intermediate pressure (IP) section, or high pressure (HP) section, as available. An exemplary embodiment derives steam from the LP section, providing it meets pressure drop requirements at the turbine compartment 12. A steam control valve 56 regulates a steam flow that is selectively delivered to the liquid fuel delivery system 14 via a steam delivery line 58 that is in flow communication with the fuel delivery system 14. In the illustrated embodiment, the steam is delivered to the liquid fuel delivery system 14 at a location downstream of the control valve 46 and upstream of the flow divider 48, and possibly upstream of the second liquid fuel pump 43. The terms "upstream" and "downstream" generally refer to the direction of flow, with respect to either the steam or the liquid fuel.

In operation, for a dual fuel unit, a liquid fuel purge is performed during a turbine assembly 10 shutdown with gas fuel operation. Once the turbine assembly 10 shutdown is initiated, a control system starts reducing load until a predetermined value is reached. At this point, the steam control valve 56 is opened to purge the liquid fuel delivery system 14. The purge removes all residual liquid fuel from the liquid fuel delivery system 14, as well as any coking and carbon deposition that may have occurred during operation. The timing of the steam purge will be designed to perform a certain number of volume sweeps, such that the liquid fuel and any carbon deposit is reduced or eliminated.

For operation during turbine assembly 10 startup, the steam is introduced into the liquid fuel delivery system 14 to remove any residual carbon and liquid fuel and ensures a smooth transition to liquid fuel once the turbine assembly 10 requires such operation.

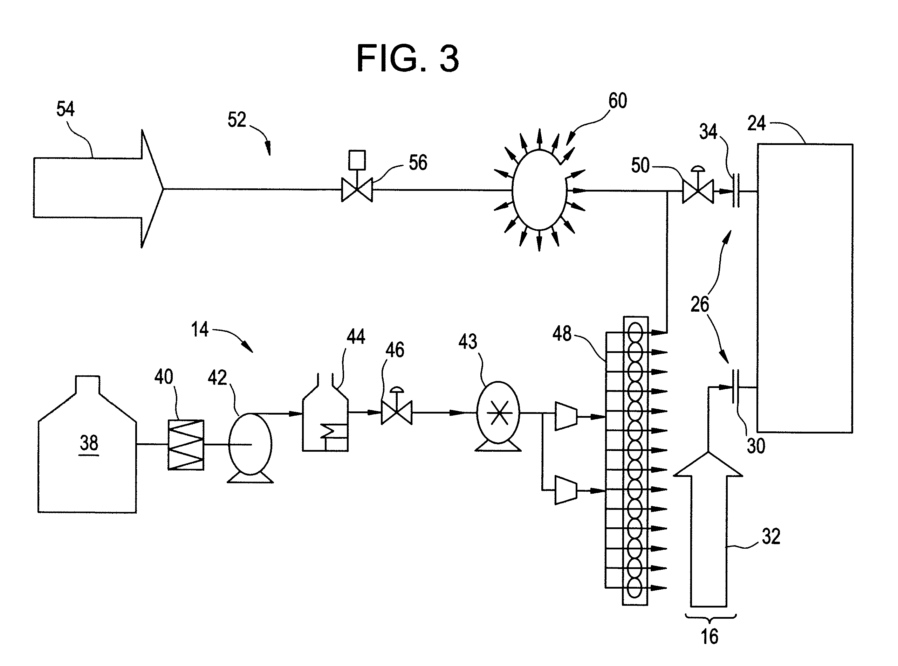

Referring to FIG. 3, another exemplary embodiment is schematically illustrated. The liquid delivery system 14 is similar to that previously described above. The steam delivery system 52 includes the steam source 54 and the steam control valve 56, but also includes a steam manifold 60 for selectively distributing the steam to the fuel delivery system 14. The steam is delivered to the liquid fuel delivery system 14 at a location downstream of the flow divider 48, but upstream of the combustor valve 50. In this case, the steam is introduced via the steam manifold 60 and will flow back downstream to the control valve 46, thereby purging the liquid fuel delivery system 14 at critical areas that are susceptible to coking, such as the combustor valve 50 and piping downstream of the flow divider 48.

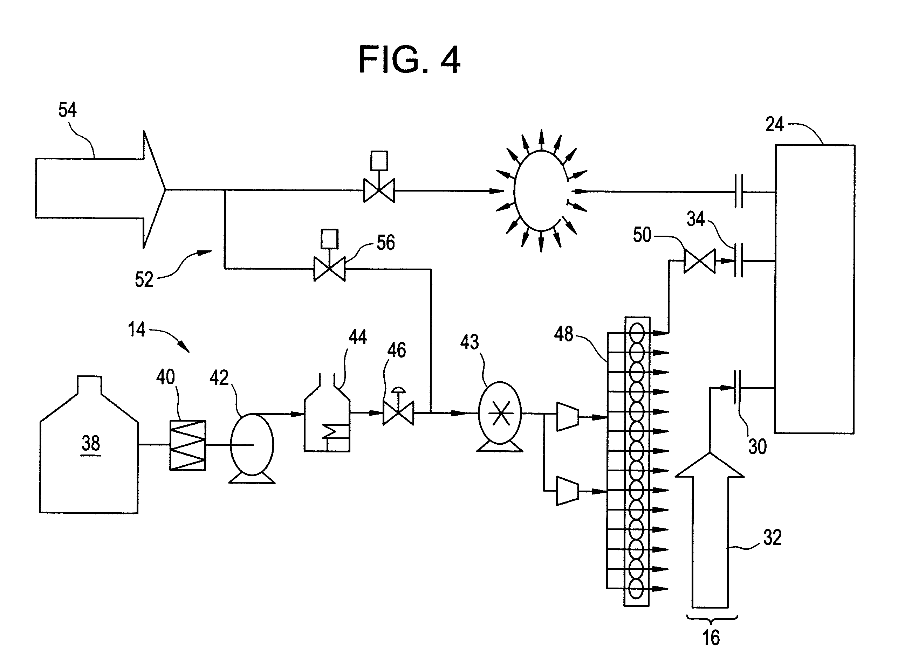

Referring to FIG. 4, yet another exemplary embodiment of the steam delivery system 52 is schematically illustrated. In the illustrated embodiment, an existing steam source 54 already present on a turbine system 10 is modified to include the steam delivery option to the liquid fuel delivery system 14. Similar to a previous embodiment described above, the steam is introduced to the liquid fuel delivery system 14 at a location downstream of the control valve 46 and upstream of the flow divider 48 and optionally the second liquid fuel pump 43. The existing steam source 54 may have been previously utilized for NOₓ abatement and/or power augmentation purposes.

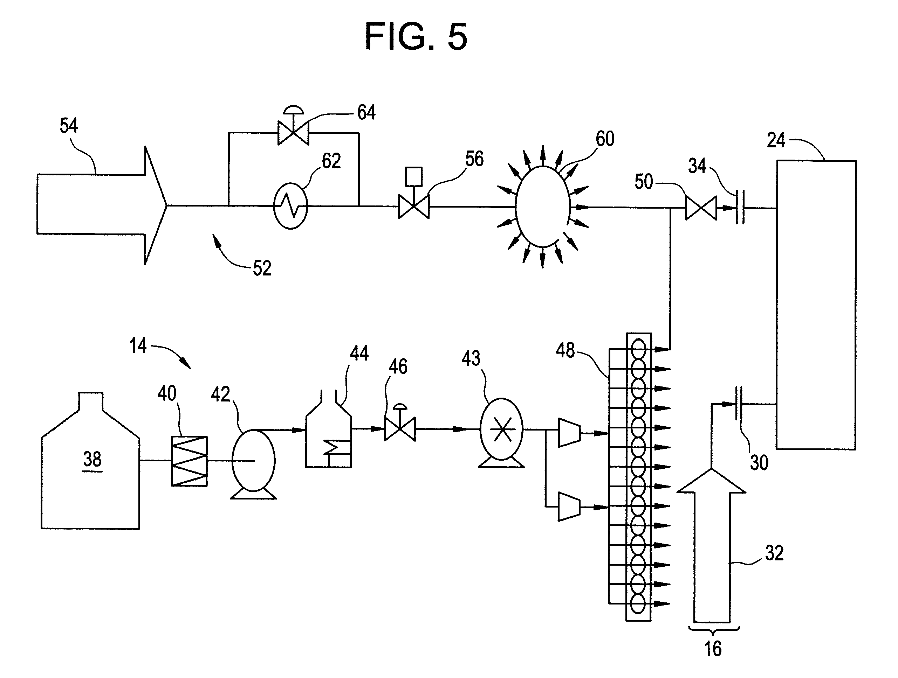

Referring now to FIG. 5, a further exemplary embodiment is schematically illustrated. The steam delivery system 52 includes the steam source 54, the steam control valve 56, and the steam manifold 60, as described above. The process conditions for the steam delivery system 52 are dictated, at least in part, by the flash point and auto-ignition temperature of the liquid fuel being purged from the liquid fuel delivery system 14. For example, if the expected steam conditions from the steam source 54 is higher than the auto-ignition temperature of the liquid fuel in service, the steam used for purging needs to be cooled prior to being injected into the liquid fuel delivery system 14. In this case, a cooler 62 is employed to potentially cool the steam prior to introduction into the liquid fuel delivery system 14. Additionally, a bypass valve 64 is included to selectively control whether the steam is passed through the cooler 62 en route to the liquid fuel delivery system 14.

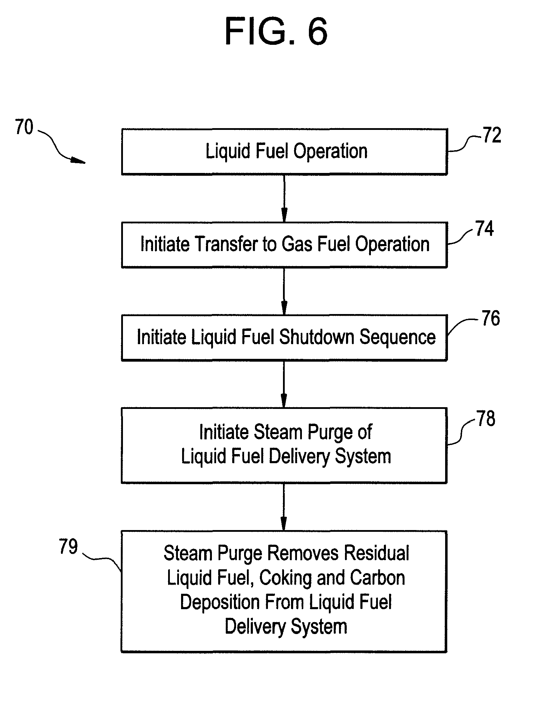

Referring to FIG. 6, a flow diagram illustrates a method for purging fuel in the liquid fuel delivery system 14, the method being referred to generally as 70. The method 70 illustrates utilization of a steam purge of the liquid fuel delivery system 14 during a shutdown process of the turbine assembly 10. For a dual fuel unit, the turbine assembly 10 operates for a particular period in a liquid fuel operating condition 72. One type of turbine assembly 10 functions in a gas fuel operating condition 74 prior to and at unit shutdown. Upon initiation of a turbine assembly 10 shutdown sequence 76, a control system reduces load to a predetermined value, at which a steam purge sequence 78 is initiated. The steam purge sequence 78 includes selectively distributing steam throughout various portions of the liquid fuel delivery system 14 for removing residual liquid fuel 79, as well as any coking and carbon deposition that may have occurred during operation.

Although the method 70 described above refers to a shutdown procedure associated with the turbine assembly 10, it is to be appreciated that a steam purge may be employed during other turbine assembly 10 operations, such as startup and transition between gas fuel and liquid fuel, or vice versa.

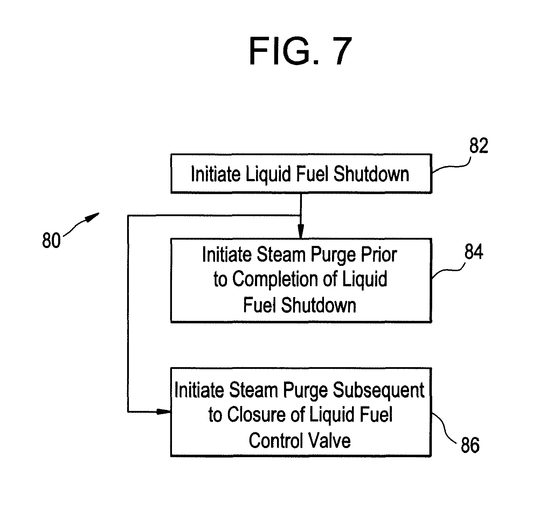

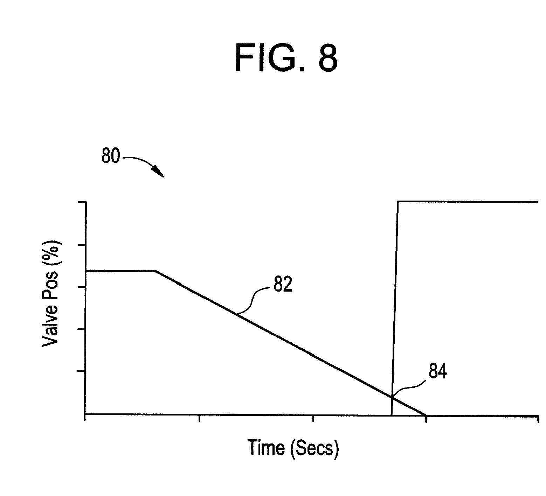

Referring to FIGS. 7 and 8, a sequence of valve operation 80 during steam purging initiation is illustrated. The illustrated figures pertain to a cessation of liquid fuel operation, where the liquid fuel control valve 46 is transitioned from an open position to a closed position, thereby halting the flow of liquid fuel to the turbine compartment 12. The sequence of valve operation 80 includes gradually closing the liquid fuel control valve 82. Prior to complete closure of the liquid fuel control valve 46, the steam control valve 56 is opened, thereby initiating the steam purge 84 prior to complete closure of the liquid fuel control valve 46. The initiating the steam purge 84 may be triggered at a specific desired valve position of the liquid fuel control valve 46, by a heat input reading to the turbine, or by the flow rate of the liquid fuel to the turbine. Such a range of liquid fuel control valve 46 positions that may trigger the opening of the steam control valve 56 may vary depending on the application of use. By initiating the steam purge 84 prior to complete closure of the liquid fuel control valve 46, the steam mixes with the liquid fuel and reduces the unaccounted energy being added to the combustor 24. Additionally, the sequence of valve operation 80 assists in keeping a positive pressure at the nozzle assembly 26 of the combustor 24.

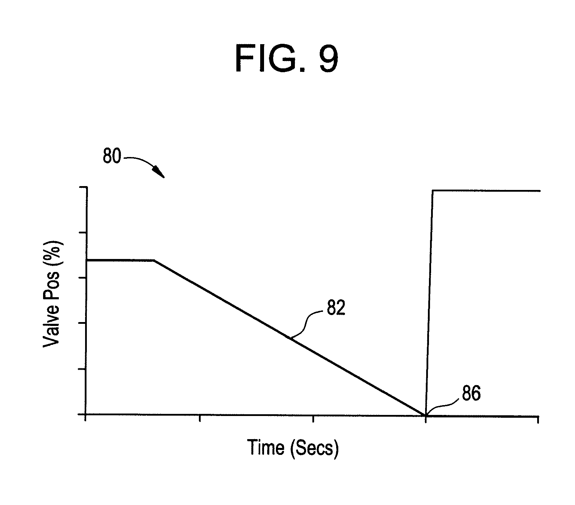

Referring to FIG. 9, it is to be appreciated that although described above as a sequence involving opening of the steam control valve 56 prior to complete closure of the liquid fuel control valve 46, it is also contemplated that the sequence of valve operation 80 includes opening the steam control valve subsequent to closure 86 of the liquid fuel control valve 46.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method of purging liquid fuel from a turbine assembly comprising:
   providing a liquid fuel delivery system having a liquid fuel supply, a liquid fuel control valve, and a combustor valve located upstream of a combustor;
   providing a steam delivery system having a steam source and a steam control valve;
   operably connecting the steam delivery system to the liquid fuel delivery system; and
   selectively delivering a steam from the steam delivery system to the liquid fuel delivery system at a location upstream of the combustor valve.
2. The method of purging fuel of clause 1, further comprising initiating a liquid fuel shutdown sequence including transitioning the liquid fuel control valve from an open position to a fully closed position.
3. The method of purging fuel of clause 2, further comprising opening the steam control valve prior to the liquid fuel control valve transitioning to the fully closed position.
4. The method of purging fuel of clause 2 or 3, wherein opening the steam control valve occurs subsequent to the liquid fuel control valve transitioning to the fully closed position.

## Claims

1. A fuel purging system for a turbine assembly (10) comprising:
a fuel delivery system (14) comprising:
a fuel source for (38) providing a fuel to the turbine assembly (10);
a control valve (46) for regulating a fuel flow of the fuel;
a flow divider (48) for selectively distributing the fuel to at least one combustor (24); and
a combustor valve (50) located upstream of the at least one combustor (24);
and
a steam source (54) for distributing a steam to the fuel delivery system (14) at a location upstream of the combustor valve (50).

2. The fuel purging system of claim 1, further comprising a fuel pump (42) located downstream of the control valve (46) and upstream of the flow divider (48).

3. The fuel purging system of claim 1 or 2, further comprising a steam control valve (56) for regulating a steam flow of the steam.

4. The fuel purging system of any of claims 1 to 3, wherein the steam is distributed upstream of the flow divider (48).

5. The fuel purging system of claim 3, wherein the steam is distributed upstream of the fuel pump (56).

6. The fuel purging system of any of claims 3 to 5, wherein the steam control valve (56) and a steam manifold (60) selectively distribute the steam to the fuel delivery system (14).

7. The fuel purging system of any preceding claim, wherein the steam source (54) is a heat recovery steam generator.

8. The fuel purging system of claim 6, further comprising a cooler (62) for cooling the steam prior to distribution of the steam to the fuel delivery system (14).

9. A method of purging fuel from a turbine assembly (10) comprising:
providing a fuel delivery system (14) having a fuel supply (38) and a combustor valve (50) located upstream of a combustor (24);
providing a steam source (54);
operably connecting the steam source (54) to the fuel delivery system (14);
and
selectively delivering a steam from the steam source (54) to the fuel delivery system (14) at a location upstream of the combustor valve (50).

10. The method of purging fuel of claim 9, further comprising selectively delivering the steam during one of a turbine assembly startup sequence or a turbine assembly shutdown sequence.

11. The method of purging fuel of claim 9 or 10, wherein the fuel delivery system further comprises a fuel pump (42) and a flow divider (48).

12. The method of purging fuel of claim 11, further comprising selectively delivering the steam to the fuel delivery system (14) upstream of the flow divider (48).

13. The method of purging fuel of claim 11, further comprising selectively delivering the steam to the fuel delivery system (14) upstream of the fuel pump (42).

14. The method of purging fuel of any of claims 9 to 13, further comprising initiating a liquid fuel shutdown sequence including transitioning a liquid fuel control valve (46) from an open position to a fully closed position.

15. The method of purging fuel of claim 14, further comprising opening a steam control valve (56) prior to the liquid fuel control valve (46) transitioning to the fully closed position.

16. The method of purging fuel of claim 14 or 15, wherein opening the steam control valve (56) occurs subsequent to the liquid fuel control valve (46) transitioning to the fully closed position.
